(19) Europäisches Patentamt
European Patent Office
Office européen des brevets

(11) **EP 4 488 198 A1**

(12) **EUROPEAN PATENT APPLICATION**
published in accordance with Art. 153(4) EPC

(43) Date of publication:
08.01.2025 Bulletin 2025/02

(21) Application number: 22928275.1

(22) Date of filing: 08.11.2022

(51) International Patent Classification (IPC):
*B65G 1/00* (2006.01)     *B65G 1/04* (2006.01)
*B65G 1/137* (2006.01)    *A47F 5/00* (2006.01)
*B25J 5/00* (2006.01)     *B25J 9/16* (2006.01)

(52) Cooperative Patent Classification (CPC):
A47F 5/00; B25J 5/00; B25J 9/16; B65G 1/00;
B65G 1/04; B65G 1/137

(86) International application number:
PCT/CN2022/130656

(87) International publication number:
WO 2023/160013 (31.08.2023 Gazette 2023/35)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 28.02.2022 CN 202220416987 U
26.04.2022 CN 202220997770 U

(71) Applicant: Beijing Geekplus Technology Co. Ltd
Beijing 100102 (CN)

(72) Inventors:
• WANG, Mengdi
  Beijing 100102 (CN)
• LI, Xuran
  Beijing 100102 (CN)
• PENG, Xingwen
  Beijing 100102 (CN)
• XING, Zhiwei
  Beijing 100102 (CN)

(74) Representative: Manna, Sara et al
Società Italiana Brevetti S.p.A.
Piazza di Pietra, 39
00186 Roma (IT)

(54) **OBJECT CARRYING DEVICE, TRANSPORT ROBOT, WAREHOUSING SYSTEM AND GOODS SHELF**

(57) Provided in the present application are an object carrying device (1), a transport robot (120), a warehousing system (100) and a goods shelf (110). The object carrying device (1) comprises a bottom plate (10) and a support layer (20). The support layer (20) is used for carrying objects, and comprises a plurality of protruding members (25), the plurality of protruding members (25) being arranged on a first side (11) of the bottom plate (10), protruding in the height direction (Z) from said side and being arranged at intervals in a first direction (X), so that forks of a warehousing device can enter the support layer (20). The height direction is perpendicular to the first direction. On the basis of the object carrying device (1) of the present application, by providing the protruding members (25) arranged at intervals, the object carrying device (1) can cooperate with forks of a warehousing device (such as the goods shelf (110), a conveyor belt, etc.) to complete the carrying and transferring of goods. The object carrying device (1) can be adapted to containers or goods of different sizes by adjusting the distance among the protruding members (25).

Fig. 1

## Description

### CROSS-REFERENCE TO RELATED APPLICATIONS

The present disclosure refers to China Patent Application No. 202220997770.8 filed on April 26, 2022 and China Patent Application No. 202220416987.5 filed on February 28, 2022, which are all incorporated herein by reference.

### FIELD

The present disclosure relates to the field of intelligent warehousing, and more particularly to a carrying device, a transfer robot, a warehousing system and a goods shelf.

### BACKGROUND

For a mode of taking out and placing containers in a goods shelf by a combination of a variety of robots, there is a lack of a reliable combination of the goods shelf and a robot top plate at present, which can stably take out containers of different sizes from the goods shelf or place the containers into the goods shelf.

### SUMMARY

A series of simplified concepts are introduced in the summary, which will be further explained in details in the detailed description. The summary of the present disclosure does not mean trying to define the key features and necessary technical features of the claimed technical solution, let alone trying to determine the protection scope of the claimed technical solution.

A first aspect of the present disclosure provides a carrying device, which includes: a bottom plate; and a support layer configured to bearing an object, and including a plurality of protrusions arranged on a first side of the bottom plate and protruding from the first side of the bottom plate along a height direction. The plurality of protrusions are arranged at intervals along a first direction, so that shelf teeth of a warehousing device are configured to enter the support layer. The first direction is perpendicular to the height direction.

According to the carrying device of the present disclosure, by arranging the protrusions spaced apart from each other, the carrying device can be matched with the shelf teeth of the warehousing device (such as the goods shelf, a conveyor belt, etc.), and the goods can be transported and transferred. By adjusting the distance between the protrusions, the carrying device can be suitable for containers or goods of different sizes.

Optionally, the carrying device further includes a plurality of first blocking members, the plurality of first blocking members are arranged to the protrusions and respectively arranged at both ends of the support layer along the first direction, or the plurality of first blocking members are arranged to the first side of the bottom plate and respectively arranged at both sides of the support layer along the first direction. The first blocking member extends beyond the protrusion in the height direction on the first side.

According to the present disclosure, the first blocking member restricts the posture of the container or goods in the first direction.

Optionally, the first blocking member includes a first guide surface, and the first guide surface is inclined outwards and upwards along the first direction.

According to the present disclosure, the first guide surface makes it easier to guide the object onto the support layer.

Optionally, the first blocking member is arranged to the protrusion along an edge of the support layer, and the support layer extends to an edge of the bottom plate; or, the first blocking member is arranged to the bottom plate along an edge of the bottom plate.

According to the present disclosure, the first blocking member is arranged along the edge of the bottom plate or the support layer, and the support layer extends to the edge of the bottom plate, so that the support area of the support layer can be increased as much as possible, and thus the carrying device can be suitable for objects with various sizes.

Optionally, the first blocking member is configured as a blocking rod or a blocking sheet extending in a direction perpendicular to the first direction.

In the present disclosure, the first blocking member is easy to produce and process, and does not interfere with the shelf teeth of the warehousing device entering the support layer.

Optionally, the carrying device has an axisymmetric structure.

In the present disclosure, the carrying device has the axisymmetric structure and is easy to produce and process. Moreover, since the container is mostly rectangular, the symmetrical carrying device can better adapt to the shape of the container.

Optionally, the first direction is a width direction or a length direction of the bottom plate.

In the present disclosure, the carrying device can make the protrusions arranged at intervals in the width direction or the length direction of the bottom plate as required.

Optionally, the plurality of protrusions are arranged at equal or unequal intervals along the first direction.

In the present disclosure, the carrying device can flexibly set the spacing of the protrusions as required.

Optionally, the protrusion is configured as a strip extending in a direction perpendicular to the first direction.

In the present disclosure, the protrusion can be configured as a strip-shaped component, which is easy to produce and process.

Optionally, the protrusion is provided with a lightening hole.

In the present disclosure, the lightening hole can reduce the weight of the carrying device and save materials.

Optionally, the protrusion is configured as a pin column.

Further, the plurality of pin columns are arranged at intervals along the first direction and are also arranged at intervals along a direction perpendicular to the first direction.

In the present disclosure, the protrusions can also be configured as pin-column-shaped components distributed on the bottom plate, which are easy to produce and process.

Optionally, the plurality of pin columns are arranged at equal intervals along the first direction, and/or the plurality of pin columns are also arranged at equal intervals along the direction perpendicular to the first direction.

In the present disclosure, a plurality of pin-column-shaped protrusions are arranged at equal intervals in two mutually perpendicular directions or one of them, so that the plurality of protrusions can share the weight of the carried object equally.

Optionally, the carrying device further includes a plurality of second blocking members, the plurality of second blocking members are arranged to the protrusions and respectively arranged at both ends of the support layer along a second direction, or the plurality of second blocking members are arranged to the first side of the bottom plate and respectively arranged at both sides of the support layer along the second direction. The second direction is perpendicular to the first direction and the height direction, and the second blocking member extends beyond the protrusion in the height direction on the first side.

According to the present disclosure, the second blocking member restricts the posture of the container or goods in the second direction.

Optionally, the second blocking member includes a second guide surface, and the second guide surface is inclined outwards and upwards along the second direction.

According to the present disclosure, the second guide surface makes it easier to guide the object onto the support layer.

Optionally, the second blocking member is arranged to the protrusion along an edge of the support layer, and the support layer extends to an edge of the bottom plate; or, the second blocking member is arranged to the bottom plate along an edge of the bottom plate.

According to the present disclosure, the second blocking member is arranged along the edge of the bottom plate or the support layer, and the support layer extends to the edge of the bottom plate, so that the support area of the support layer can be increased as much as possible, and thus the carrying device can be suitable for objects with various sizes.

Optionally, the second blocking member is configured as a blocking rod.

In the present disclosure, the first blocking member is easy to produce and process, and does not interfere with the shelf teeth of the warehousing device entering the support layer.

A second aspect of the present disclosure provides a transfer robot, which includes: a robot body configured to move; and the above carrying device arranged at a top of the robot body. A side of the bottom plate facing away the first side faces the robot body.

According to the transfer robot of the present disclosure, the object is carried and supported by the carrying device, and the object moves to the target position along with the robot body. The carrying device is provided with the protrusions spaced apart from each other, so that the transfer robot can be fitted with the shelf teeth of the warehousing device (such as the goods shelf and the conveyor belt) to complete the transportation and transfer of the goods. By adjusting the distance between the protrusions, the transfer robot can be suitable for containers or goods of different sizes.

A third aspect of the present disclosure provides a warehousing system, which includes: the above transfer robot; and a goods shelf including a plurality of shelf teeth arranged at intervals. The plurality of shelf teeth are matched with the protrusions, so that the protrusions are configured to simultaneously protrude from gaps among the shelf teeth.

According to the warehousing system of the present disclosure, when placing or taking out the object, the transfer robot needs to move up and down relative to the shelf teeth, so that the object can be alternately carried by the protrusions of the carrying device and the shelf teeth. The carrying device is provided with the protrusions spaced apart from each other, so that the transfer robot can be fitted with the shelf teeth of the warehousing device (such as the goods shelf and the conveyor belt) to complete the transportation and transfer of the goods. By adjusting the distance between the protrusions, the transfer robot can be suitable for containers or goods of different sizes.

Optionally, the carrying device of the transfer robot further includes a plurality of first blocking members, the plurality of first blocking members are arranged to the protrusions and respectively arranged at both ends of the support layer along the first direction, or the plurality of first blocking members are arranged to the first side of the bottom plate and respectively arranged at both sides of the support layer along the first direction. The first blocking member extends beyond the protrusion in the height direction on the first side. The plurality of shelf teeth are also matched with the first blocking members, so that the first blocking members are configured to simultaneously protrude from the gaps among the shelf teeth.

In the present disclosure, the first blocking member can control the posture of the goods or containers in the first direction.

Optionally, the carrying device of the transfer robot further includes a plurality of second blocking members, the plurality of second blocking members are arranged to the protrusions and respectively arranged at two ends of the support layer along a second direction, or the plurality of second blocking members are arranged to the first side of the bottom plate and respectively arranged at two sides of the support layer along the second direction. The second direction is perpendicular to the first direction and the height direction, and the second blocking member extends beyond the protrusion in the height direction on the first side. The plurality of shelf teeth are also matched with the second blocking members, so that the second blocking members are configured to simultaneously protrude from the gaps among the shelf teeth.

In the present disclosure, the second blocking member can control the posture of the goods or containers in the second direction.

Optionally, the shelf teeth are arranged at a lowest floor of the goods shelf.

Further, the warehousing system also includes a high-floor working robot, the transfer robot is configured to remove goods from or placing goods to the lowest floor of the goods shelf, and the high-floor working robot is configured to remove goods from or placing goods to other floors of the goods shelf.

In the present disclosure, the transfer robot and the high-floor working robot are combined to complete the work of goods transportation and transfer.

A fourth aspect of the present disclosure provides a warehousing system, which includes: a goods shelf configured to storing containers, a lowest floor of the goods shelf including a temporary storage position and a two-way transport channel adjacent to the temporary storage position, and the temporary storage position being provided with shelf teeth; and a transfer robot configured to perform at least one of the following actions: taking the container from the temporary storage position, placing the container into the temporary storage position, and traveling in the two-way transport channel when loaded or unloaded.

According to the warehousing system of the present disclosure, the middle part of the lowest floor of the goods shelf is used as the two-way transport channel, and the transfer robot only takes the container from the temporary storage position in the lowest floor, so that the complexity of the path of the transfer robot is reduced, the scheduling is simplified, and the working efficiency is improved.

Optionally, the temporary storage position is higher than the ground, and a height gap between the temporary storage position and the ground is configured as an additional transport channel, so that the transfer robot is configured to travel in the additional transport channel and move to be below the temporary storage position when unloaded. According to this solution, it is convenient for the transfer robot to take and place the container, and the walking path can be reduced.

Optionally, the goods shelf includes at least two floors and at least four rows of goods stations on each floor, two rows of goods stations at both ends of the lowest floor of the goods shelf are configured as the temporary storage positions, and other middle space in the lowest floor of the goods shelf except the two rows of temporary storage positions is configured as the two-way transport channel.

Optionally, the goods shelf includes four rows of goods stations on each floor, the goods shelf includes two end rows and two middle rows located between the two end rows, and the two-way transport channel is located in a spatial position of the two middle rows in the lowest floor of the goods shelf. According to this solution, the structure is simple and easy to implement.

Optionally, other goods positions in the goods shelf except the temporary storage positions are storage positions. According to this solution, the containers can be stored in the other positions of the goods shelf for a long time.

Optionally, a laneway is arranged between adjacent goods shelves, and the warehousing system further includes a high-floor working robot, and the high-floor working robot is configured to travel in the laneway. According to this solution, the high-floor working robot moves in the roadway, while the transfer robot moves at the lowest floor of the goods shelf, which avoids the intersection of the paths of the two and is conducive to improving the work efficiency.

Optionally, the high-floor working robot has a container taking and placing device, the container taking and placing device is configured to perform at least one of the following actions: taking the container from the storage position and placing the container on the temporary storage position, and taking the container from the temporary storage position and placing the container on the storage position. According to the above arrangement, the high-floor working robot can be used to transport the goods between the temporary storage position and the storage space.

Optionally, the storage position located in the end row in the goods shelf is configured as a first storage position, and the high-floor working robot is configured to take the container from the first storage position and place the container into the temporary storage position. Therefore, the efficiency of the transfer robot taking the container from the temporary storage position can be improved.

Optionally, the storage position located in the middle row on an inner side of the end row in the goods shelf is configured as a second storage position, and the high-floor working robot is configured to take the container from the second storage position and place the container into the first storage position. According to the above arrangement, the second storage position is used to replenish the first storage position, which can improve the efficiency of the high-floor working robot moving the container to the temporary storage position.

Optionally, the number of the rows in the goods shelf is an even number. According to this solution, the space of the goods shelf can be fully utilized.

Optionally, the two-way transport channel includes at least one first channel and at least one second channel, and the first channel and the second channel allow opposite driving directions. The number of the first channels is equal to the number of the second channels. Thus, this facilitates improving the moving efficiency of the transfer robot.

Optionally, the transfer robot is configured to have the above carrying device.

A fifth aspect of the present disclosure provides a goods shelf for storing containers. A lowest floor of the goods shelf includes a temporary storage position and a two-way transport channel adjacent to the temporary storage position, and the temporary storage position is provided with shelf teeth.

Optionally, the goods shelf includes at least two floors and at least four rows of goods stations in each floor, two rows of goods stations located at both ends of the lowest floor of the goods shelf are configured as the temporary storage positions, and other middle space located in the lowest floor of the goods shelf except the two rows of temporary storage positions is configured as the two-way transport channel.

Optionally, a gap is defined between adjacent shelf teeth, and the gap is communicated with the two-way transport channel.

Optionally, the goods shelf includes four rows of goods stations on each floor, the goods shelf includes two end rows and two middle rows located between the two end rows, and the two-way transport channel is located in a spatial position of the two middle rows in the lowest floor of the goods shelf.

Optionally, other goods positions in the goods shelf except the temporary storage position are storage positions.

Optionally, the number of the rows in the goods shelf is an even number.

Optionally, the two-way transport channel includes at least one first channel and at least one second channel, and the first channel and the second channel allow opposite driving directions. The number of the first channels is equal to the number of the second channels.

## BRIEF DESCRIPTION OF THE DRAWINGS

Fig. 1 shows a carrying device according to a first embodiment of the present disclosure.
Fig. 2 shows a warehousing system according to a preferred embodiment of the present disclosure.
Fig. 3 shows a carrying device according to a second embodiment of the present disclosure.
Fig. 4 is a schematic top view of the carrying device loaded with a container shown in Fig. 1.
Fig. 5 is a schematic view of a warehousing system according to a preferred embodiment of the present disclosure, in which a high-floor working robot is about to replenish a first storage position.
Fig. 6 is a schematic view of a warehousing system according to a preferred embodiment of the present disclosure, in which a high-floor working robot is about to replenish a temporary storage position.
Fig. 7 is a schematic view of a warehousing system according to a preferred embodiment of the present disclosure, in which a transfer robot is about to take a container from a temporary storage position.
Fig. 8 is a schematic view of a warehousing system according to a preferred embodiment of the present disclosure, in which a transfer robot has taken a container from a temporary storage position and moved to a two-way transport channel.

## DETAILED DESCRIPTION

In the following description, numerous specific details are set forth in order to provide a more thorough understanding of the present disclosure. However, it will be apparent to those skilled in the art that the present disclosure may be practiced without one or more of these details. In other examples, in order to avoid confusion with the present disclosure, some technical features well known in the field are not described.

For a thorough understanding of the present disclosure, a detailed description will be set forth in the following description. It should be understood that these embodiments are provided so that the disclosure of the present disclosure will be thorough and complete, and will fully convey the concepts of these illustrative embodiments to those skilled in the art. Obviously, the implementation of the embodiments of the present disclosure is not limited to the specific details familiar to those skilled in the art. Preferred embodiments of the present disclosure are described in detail as follows, however, besides these detailed descriptions, the present disclosure may have other embodiments.

It should be noted that the terms used here are only for describing specific embodiments, and are not intended to limit illustrative embodiments according to the present disclosure. As used herein, the singular form is also intended to include the plural form unless the context clearly indicates otherwise. Furthermore, it should also be understood that when the terms "comprise" and/or "include" are used in this specification, they specify the presence of features, integers, steps, operations, elements and/or components, but do not exclude the presence or addition of one or more other features, integers, steps, operations, elements, components and/or their combinations.

Ordinal numbers such as "first" and "second" quoted in the present disclosure are only signs, and do not have any other meaning, such as a specific order. Moreover, for example, the term "first component" itself does not imply the existence of "second component", and the term "second component" itself does not imply the existence of "first component".

It should be noted that the terms "up", "down", "front", "rear", "left", "right", "inside" and "outside" and similar expressions used herein are only for the purpose of illustration, rather than limitation.

Now, illustrative embodiments according to the present disclosure will be described in more details with reference to the accompanying drawings.

The present disclosure provides a carrying device, a transfer robot, a warehousing system and a goods shelf.

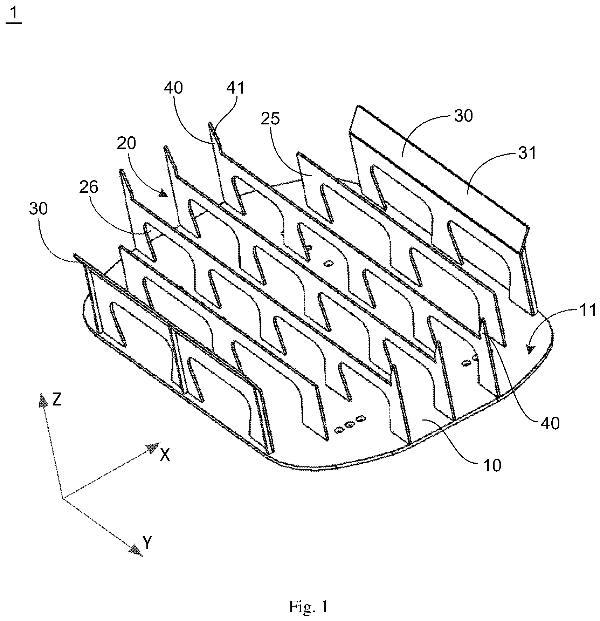

As shown in Fig. 1, in a first embodiment, a carrying device 1 according to the present disclosure includes a bottom plate 10, a support layer 20, a first blocking member 30 and a second blocking member 40.

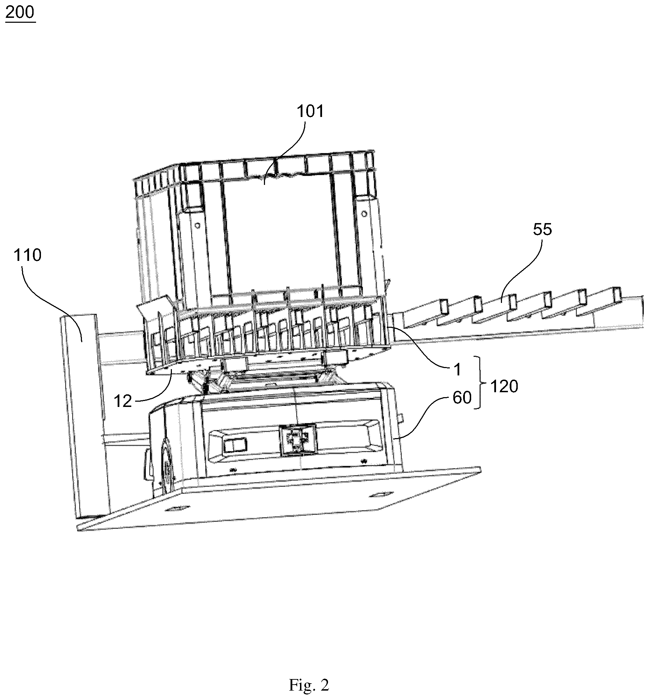

Specifically, the bottom plate 10 is generally a rectangular plate. The bottom plate 10 has a first side 11 for facing a carried object and a second side facing away from the first side 11 (see Fig. 2). The support layer 20 is used to bear the object, that is, directly contacting with the carried object (such as a container). The support layer 20 includes a plurality of protrusions 25. The plurality of protrusions 25 are arranged to the first side 11 of the bottom plate 10 and protrude from the first side 11 of the bottom plate 10 in a height direction Z. The plurality of protrusions 25 are arranged at intervals along a first direction X, so that comb teeth of a warehousing system or a warehousing device (such as the goods shelf, a conveyor belt, etc.) can enter the support layer 20 (as detailed below). When the object is placed on the support layer 20, the object is located on the first side of the bottom plate 10, and the object is supported by the protrusions 25 (see Fig. 2). The height direction Z is a direction perpendicular to the bottom plate 10. In a practical use, the height direction Z is an upward direction.

The carrying device 1 includes a plurality of first blocking members 30. The plurality of first blocking members 30 are arranged to the protrusions 25 and are respectively arranged at both ends of the support layer 20 along the first direction X. The plurality of first blocking members 30 extend beyond the protrusions 25 in the height direction Z on the first side 11 of the bottom plate 10. That is, the protrusion 25 is higher than the bottom plate 10, and the first blocking member 30 is higher than the protrusion 25. In other words, the support layer 20 is higher than the bottom plate 10, and the first blocking member 30 is higher than the support layer 20. The plurality of first blocking members 30 are arranged at intervals along the first direction X. The first direction X is a direction perpendicular to the height direction Z. The first direction X is, for example, a width direction of the bottom plate 10.

The carrying device 1 includes a plurality of second blocking members 40. The plurality of second blocking members 40 are arranged to the protrusions 25 and are respectively arranged at both ends of the support layer 20 along a second direction Y The plurality of second blocking members 40 extend beyond the protrusions 25 in the height direction Z on the first side 11 of the bottom plate 10. That is, the protrusion 25 is higher than the bottom plate 10, and the second blocking member 40 is higher than the protrusion 25. In other words, the support layer 20 is higher than the bottom plate 10, and the second blocking member 40 is higher than the support layer 20. The plurality of second blocking members 40 are arranged at intervals along the second direction Y The second direction Y is different from the first direction X. The second direction Y is perpendicular to the height direction Z. The second direction Y is, for example, a length direction of the bottom plate 10. Of course, the first direction X may also be the length direction of the bottom plate 10, and the second direction Y may also be the width direction of the bottom plate 10.

When the object is carried and supported by the support layer 20, the first blocking members 30 can block the object in the first direction X, and the second blocking members 40 can block the object in the second direction Y In other words, the first blocking members 30 and the second blocking members 40 enclose a carrying region on the support layer 20, which can block the object around the object. In this carrying region, the first blocking members 30 and the second blocking members 40 will limit a limit position of the object, so that a posture of the object can be controlled to a certain extent.

In order to make the carrying device 1 suitable for objects with various sizes, preferably, as shown in Fig. 1, all the first blocking members 30 and/or all the second blocking members 40 are arranged along edges of the support layer 20 to make full use of a bearing area of the support layer 20. In other words, the plurality of first blocking members 30 are located in two rows which are spaced apart along the first direction X, and the maximum span (or the maximum dimension) of the support layer 20 along the first direction X does not exceed the span (or the distance) of the two rows along the first direction X. The plurality of second blocking members 40 are located in two columns which are spaced apart along the second direction Y, and the maximum span (or the maximum dimension) of the support layer 20 along the second direction Y does not exceed the span (or the distance) of the two columns along the second direction Y

In order to increase the bearing area of the support layer 20 as much as possible, preferably, the support layer 20 extends to an edge of the bottom plate 10 as shown in Fig. 1.

It can be understood that a distance between the protrusions 25 also needs to adapt to the size of the carried object. The smaller the distance between the protrusions 25 is, the larger the size range of the object it can adapt to.

In the present disclosure, the first blocking member 30 and the second blocking member 40 are connected to the protrusions 25, for example, by welding, bonding or the like. Or, the first blocking member 30 is integrally formed with the protrusion 25 and/or the second blocking member 40 is integrally formed with the protrusion 25.

In the embodiment shown in Fig. 1, the protrusion 25 is configured as a strip extending in the length direction. The plurality of strip-shaped protrusions 25 are arranged at intervals along the width direction X, so that the support layer 20 has a comb-teeth shape. In order to reduce the weight of the carrying device 1, the protrusion 25 is provided with a lightening hole 26.

Preferably, the carrying device 1 has an axisymmetric structure.

Preferably, the plurality of protrusions 25 are arranged at equal intervals along the first direction X. The plurality of protrusions 25 may also be arranged at unequal intervals along the first direction X.

As shown in Fig. 2, in a preferred embodiment, the transfer robot 120 according to the present disclosure includes a robot body 60 and the carrying device 1. The carrying device 1 is arranged on the top of the robot body 60, and the second side 12 of the bottom plate 10 of the carrying device 1 faces the robot body 60. It can also be understood that the robot body 60 is connected with the carrying device 1 at the second side 12 of the bottom plate 10.

As shown in Fig. 2, in a preferred embodiment, the warehousing system 200 according to the present disclosure includes the goods shelf 110 and the transfer robot 120. The goods shelf 110 has a plurality of shelf teeth 55 (also called comb teeth) arranged at intervals. The shelf teeth 55 are used to hold goods. The shelf teeth 55 are matched with the transfer robot 120. Specifically, the shelf teeth 55 are matched with the carrying device 1. When the transfer robot 120 carries out transfer, a container 101 is placed on the carrying device 1 (specifically, the support layer 20). When the container 101 needs to be placed on the goods shelf 110, the transfer robot 120 moves to an open side of the shelf teeth 55 and aligns the protrusions 25 with gaps among the shelf teeth. Then, the transfer robot 120 moves towards the goods shelf 110, and the protrusions 25 of the support layer 20 transport the container 101 to be above the shelf teeth 55 by being spatially alternated with the shelf teeth 55 (the protrusions 25 extend into the gaps among the shelf teeth 55). Then, the height of the transfer robot 120 is lowered, to place the container 101 on the shelf teeth 55. When the transfer robot 120 is to take out the container 101, the transfer robot 120 first walks to be under the shelf teeth 55 and aligns the protrusions 25 with the gaps among the shelf teeth 55. The height of the transfer robot 120 itself is raised, and the protrusions 25 jack up the container 101 by being spatially alternated with the shelf teeth 55, so that the container 101 is placed on the carrying device 1 (specifically, the support layer 20). Subsequently, the transfer robot 120 drives the container 101 away from the position where the goods shelf is.

In the above transfer process, the first blocking member 30 and the second blocking member 40 respectively block the container 101 in the width direction and the length direction of the bottom plate 10, thus controlling the posture of the container 101 to a certain extent, so that the container 101 has a relatively uniform posture on the goods shelf 110, which can save storage space to a certain extent, and also facilitates the transfer robot 120 to stably place the container 101 in the carrying space of the carrying device 1 when taking it out.

It can be understood that in the above transfer process, not only all the protrusions 25 need to pass through the gaps among the shelf teeth 55 at the same time, but also all the first blocking members 30 and all the second blocking members 40 need to pass through the gaps among the shelf teeth 55 at the same time. That is, the plurality of shelf teeth 55 are matched with all the protrusions 25, all the first blocking members 30 and all the second blocking members 40, so that all the protrusions 25, all the first blocking members 30 and all the second blocking members 40 can simultaneously protrude from the gaps among the shelf teeth 55.

In order to match with the shelf teeth 55, in the first embodiment, the first blocking member 30 is configured as a baffle, and the second blocking member 40 is configured as a blocking rod. Of course, the first blocking member 30 can also be configured as a blocking rod. The first blocking member 30 and the second blocking member 40 can also be configured in other suitable forms.

Preferably, an inner side (a side for facing the object) of the first blocking member 30 is provided with a first guide surface 31. The first guide surface 31 is inclined outwards and upwards in the first direction X. An inner side (a side for facing the object) of the second blocking member 40 is provided with a second guide surface 41. The second guide surface 41 is inclined outwards and upwards in the second direction Y Under the action of the first guide surface 31 and the second guide surface 41, the container 101 can be guided to the support layer 20 more easily.

Preferably, in the first embodiment, the first blocking member 30 is configured as a blocking sheet extending in the second direction Y The second blocking member 40 is configured as the blocking rod, and a plurality of blocking rods located at the same side are spaced apart from each other. Of course, the first blocking member 30 can also be configured as a blocking rod, and a plurality of blocking rods located at the same side are spaced apart from each other.

Generally, the shelf teeth 55 are arranged at a lowest floor of the goods shelf 110, so that the transfer robot 120 is used to remove goods from or place goods to the lowest floor of the goods shelf 110. In this case, the warehousing system 200 further includes at least one high-floor working robot (not shown) for removing goods from or placing goods to other floors of the goods shelf 110. Therefore, the transfer robot 120 and the high-floor working robot are combined to complete the work of goods carrying and transfer.

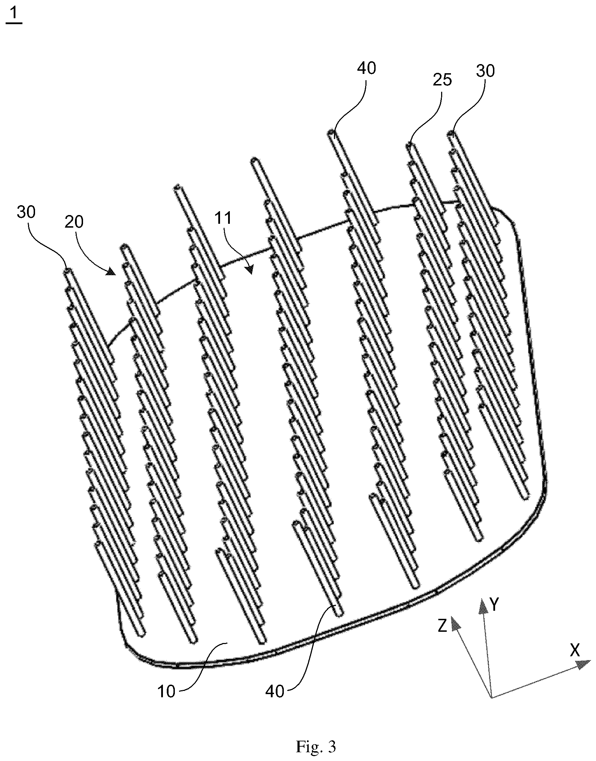

As shown in Fig. 3, in a second embodiment, the projection 25 of the carrying device 1 is configured as a pin column. The plurality of protrusions 25 are distributed on the first side 11 of the bottom plate 10, that is, the plurality of protrusions 25 are arranged at intervals along the first direction X and also arranged at intervals along the second direction Y For example, the plurality of protrusions 25 are arranged on the first side 11 in a two-dimensional lattice (a plurality of pin columns 25 are arranged at equal intervals in the first direction X and/or a plurality of pins 25 are also arranged at equal intervals in the second direction Y). The cross section of the protrusion 25 is, for example, circular, elliptical, rectangular, regular polygonal, etc. The first blocking member 30 and the second blocking member 40 are also arranged on the first side 11 of the bottom plate 10. A plurality of first blocking members 30 are respectively arranged on both sides of the support layer 20 along the first direction X. A plurality of second blocking members 40 are respectively arranged on both sides of the support layer 20 along the second direction Y The first blocking member 30 and the second blocking member 40 extend beyond the protrusion 25 in the height direction Z on the first side 11. Thus, the first blocking member 30 and the second blocking member 40 surround the support layer 20, so that the posture of the object located on the support layer 20 is controlled to a certain extent.

Similar to the first embodiment, in order to make the carrying device 1 suitable for objects with various sizes, preferably, all the first blocking members 30 are arranged along the edge of the bottom plate 10 and/or all the second blocking members 40 are arranged along the edge of the bottom plate 10, so as to sufficiently increase the bottom area of the carrying space of the carrying device 1.

The remaining unexplained parts in the second embodiment refer to the description of the first embodiment.

In a third embodiment of the present disclosure, which is not shown, the first blocking member 30 is arranged to the protrusion 25, and the second blocking member 40 is arranged to the bottom plate 10. In a fourth embodiment of the present disclosure, which is not shown, the first blocking member 30 is arranged to the bottom plate 10, and the second blocking member 40 is arranged to the protrusion 25. The remaining unexplained parts in the third and fourth embodiments refer to the descriptions of the first and second embodiments.

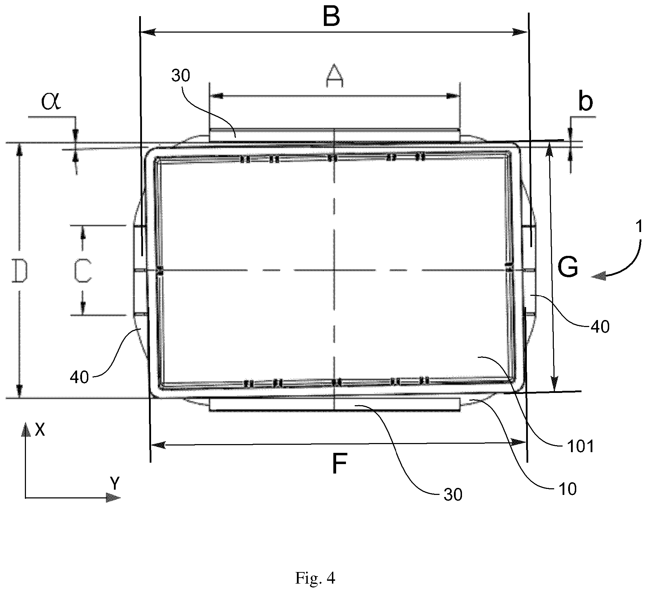

As shown in Fig. 4, both the first blocking member 30 and the second blocking member 40 of the carrying device 1 are located at the edge of the bottom plate 10 of the carrying device 1. The carrying device 1 has a symmetrical structure. A distance between two rows of first blocking members 30 spaced apart in the width direction X of the carrying device 1 is denoted as D. A total span (a total length in the length direction Y) of the first blocking member 30 is denoted as A. A distance between two columns of second blocking members 40 spaced apart in the length direction Y of the carrying device 1 is denoted as B. A total span (a total width in the width direction X) of the second blocking member 40 is denoted as C. The container 101 (for example, in a rectangular parallelepiped shape) has a length denoted as F and a width denoted as G. When the container 101 is placed on the carrying device 1, and the center of the container 101 coincides with the center of the carrying device 1, a movable distance b of the container 101 relative to the carrying device 1 is as follows:

$$b = \sqrt{G^2 + F^2} \times \sin(\arccos\frac{G}{\sqrt{A^2+D^2}} \text{-}\arctan\frac{A}{D} + \arctan\frac{G}{F})\text{-}G \quad (1).$$

Or, the movable distance b of the container 101 relative to the carrying device 1 is as follows:

$$b = \sqrt{C^2 + B^2} \times \sin(\arccos\frac{F}{\sqrt{C^2+B^2}} \text{-}\arctan\frac{C}{B} + \arctan\frac{G}{F})\text{-}G \quad (2).$$

A rotatable angle a of the container 101 relative to the carrying device 1 is as follows:

$$a = arccos(\frac{G}{\sqrt{A^2+D^2}}) - arctan(\frac{A}{D}) \quad (3).$$

Or, the rotatable angle α of the container 101 with respect to the carrying device 1 is as follows:

$$a = arccos\left(\frac{F}{\sqrt{C^2+B^2}}\right) - arctan\left(\frac{C}{B}\right) \quad (4).$$

When the dimensions of the container 101 and the carrying device 1 are known, it can be seen from the above formulas (1)-(4) that the carrying device 1 can limit the movement distance and the rotation angle of the container 101, that is, controlling the posture of the container 101 to a certain extent. Conversely, if it is desired to control the posture of the container 101 within a preset range, the span A of the first blocking member 30 and the span C of the second blocking member 40 can be deduced according to the preset range, that is, the parameters of the carrying device 1 can be modified according to the actual needs.

In a fifth embodiment of the present disclosure, which is not shown, the carrying device 1 is provided with only the first blocking member 30. In a sixth embodiment of the present disclosure, which is not shown, the carrying device 1 is provided with only the second blocking member 40. Therefore, the carrying device 1 can control the posture of the container only in one direction (the length direction or the width direction) as required, and the carrying device 1 will not limit the size of the object in the other direction (the width direction or the length direction). The remaining unexplained parts in the fifth and sixth embodiments refer to the descriptions of the first and second embodiments.

In the seventh embodiment of the present disclosure, which is not shown, the carrying device 1 is not provided with the first blocking member 30 and the second blocking member 40, so that the carrying device 1 does not limit the size of the object to a certain extent, which greatly improves the applicability of the carrying device 1.

It can be understood that the different configurations of the first blocking member 30 and the second blocking member 40 of the carrying device 1 need to match with the shelf teeth of the goods shelf 110 of the warehousing system 200, so that not only all the protrusions 25 can simultaneously protrude from the gaps among the shelf teeth 55, but also the configured first blocking member 30 and/or second blocking member 40 can simultaneously protrude from the gaps among the shelf teeth 55.

In the carrying device according to the present disclosure, the protrusions are arranged at intervals, the carrying device can be matched with the comb teeth of the warehousing device (such as the goods shelf, the conveyor belt, etc.), and the goods can be transported and transferred.

The transfer robot and the warehousing system according to the present disclosure include the carrying device according to the present disclosure, so that they have all the features and effects of the carrying device according to the present disclosure.

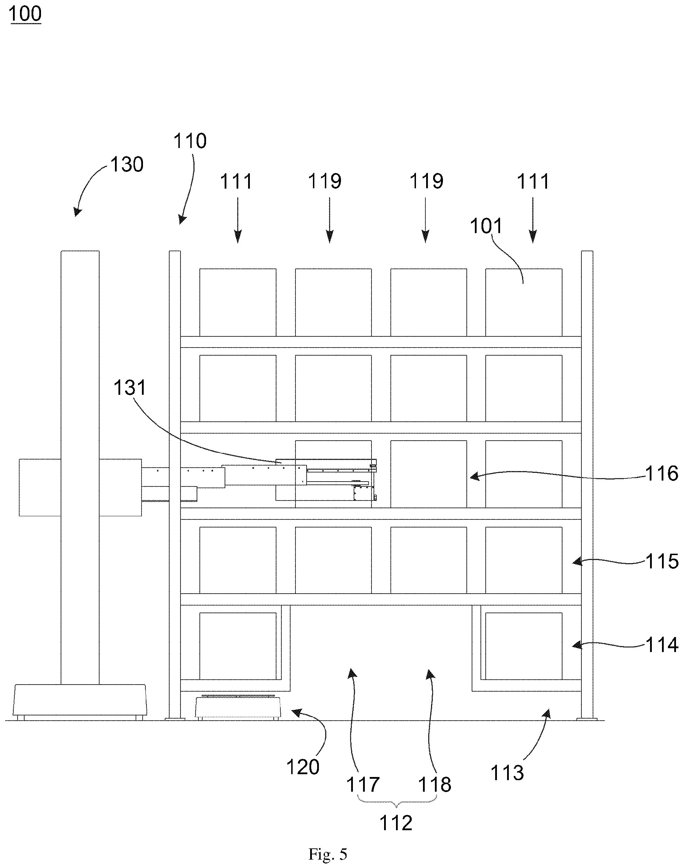

Now, an illustrative embodiment of a warehousing system 100 according to a preferred embodiment of a fourth aspect of the present disclosure will be described in more details with reference to Figs. 5 to 8.

The warehousing system 100 in the preferred embodiment of the present disclosure includes the goods shelf 110 and the transfer robot 120.

The goods shelf 110 is used to store the container 101. The goods shelf 110 is configured to have at least two floors and at least four rows of goods stations on each floor. The goods shelf 110 has end rows 111 located at two ends respectively and a middle row 119 located between the two end rows 111. For example, in this embodiment, the goods shelf 110 has four rows and five floors. That is, in this embodiment, two end rows 111 and two middle rows 119 are provided.

The middle part of the lowest floor of the goods shelf 110 has a two-way transport channel 112 for the two-way passage of the transfer robot 120. The two-way transport channel 112 includes at least one first channel 117 and at least one second channel 118 to meet the requirements of reciprocating movements respectively. Moreover, the first channel 117 and the second channel 118 each correspond to the space in the lowest floor in one row of the goods shelf 110. In other words, the first channel 117 and the second channel 118 are each arranged at the lowest floor of one row. Specifically, in this embodiment, the first channel 117 and the second channel 118 are each arranged at the lowest floor of one middle row 119. In other words, the lowest floors of the middle rows 119 are configured as the above two-way transport channel 112.

In an embodiment which is not shown, the goods shelf 110 is configured to have more rows, for example an even number of rows, such as 6 rows, 8 rows, 10 rows, etc. The other rows except the outermost end rows 111 are all configured as middle rows 119, and the lowest floors of these middle rows 119 are all configured as two-way transport channels 112 to provide walking channels for more transfer robots 120. Preferably, the number of the first channels 117 and the number of the second channels 118 are equal to improve the walking efficiency of the transfer robot 120.

In an embodiment, the lowest floor of the end row 111 is configured as a temporary storage position 114, so that it can be adjacent to the two-way transport channel 112. In addition, other goods position in the lowest floor of the goods shelf 110 except the two rows of temporary storage positions 114 are storage positions. The temporary storage position is provided with comb teeth or shelf teeth. There is a gap between adjacent comb teeth or adjacent shelf teeth, which is communicated with the two-way transport channel.

The transfer robot 120 is configured to perform actions such as taking the container 101 from the temporary storage position 114, placing the container 101 in the temporary storage position 114, and traveling in the first channel 117 and/or the second channel 118 when loaded or unloaded.

The moving direction of the transfer robot 120 in the first channel 117 is opposite to the moving direction of the transfer robot 120 in the second channel 118. For example, the container 101 where the goods pre-hit in orders are located or the container 101 where the goods with high popularity are located can be moved to the temporary storage position 114, so that it is convenient for the transfer robot 120 to quickly transport the goods to a next station.

Preferably, the temporary storage position 114 in the lowest floor of the goods shelf 110 is higher than the ground, and the height gap between the temporary storage position 114 and the ground is configured as an additional transport channel 113, so that the transfer robot 120 can travel in the additional transport channel 113 and move to be below the temporary storage position 114 when unloaded. Therefore, it is convenient for the transfer robot 120 to pick up the container, and the walking path can be reduced.

In addition, the warehousing system 100 may also include a high-floor working robot 130. A laneway is arranged at the side of the goods shelf 110, or between adjacent goods shelves 110, and the high-floor working robot 130 can move along the laneway. The high-floor working robot 130 can be used to move the container 101 into the temporary storage position 114 for the transfer robot 120 to pick up the goods. Specifically, the high-floor working robot 130 has a container taking and placing device 131. The container taking and placing device 131 is configured to take the container 101 from the storage position and place it on the temporary storage position 114, and take the container 101 from the temporary storage position 114 and place it on the storage position.

In a preferred embodiment, for a plurality of rows of goods shelves 110, the efficiency of the high-floor working robot 130 picking up the container 101 located in the middle goods position is lower than the efficiency of the high-floor working robot 130 picking up the container 101 located in the outer goods position. The other floors of the end row 111 are configured as first storage positions 115. The other floors of the middle row 119 except the lowest floor are configured as second storage positions 116.

The high-floor working robot 130 is configured not to directly move the container 101 in the second storage position 116 into the temporary storage position 114. It is necessary to enable the high-floor working robot 130 to only move the container 101 located in the first storage position 115 to the temporary storage position 114, and the container 101 in the second storage position 116 is used to replenish the first storage position 115. Thus, it is possible to improve the efficiency of the high-floor working robot 130 moving the container 101 to the temporary storage position 114, and the efficiency of the transfer robot 120 picking up the goods.

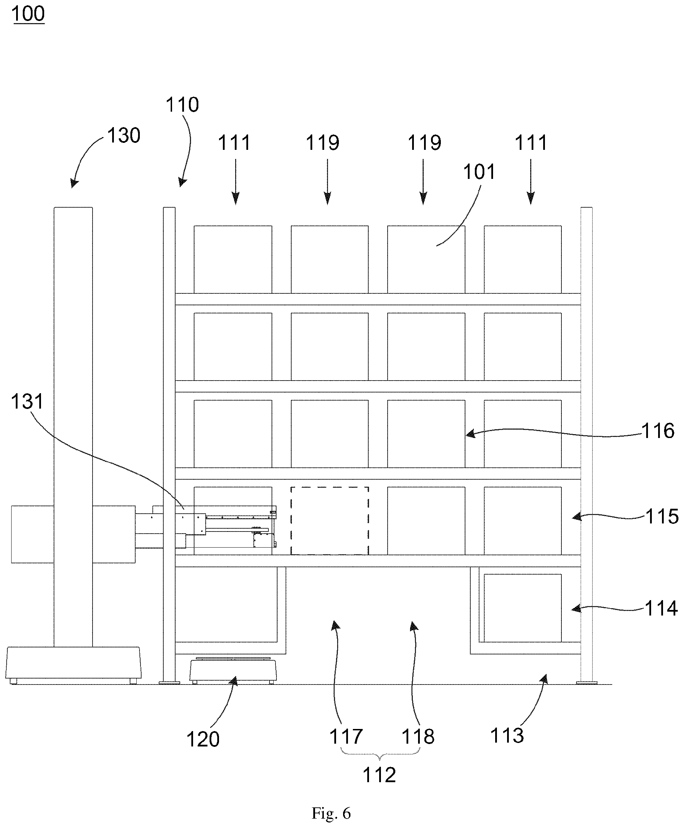

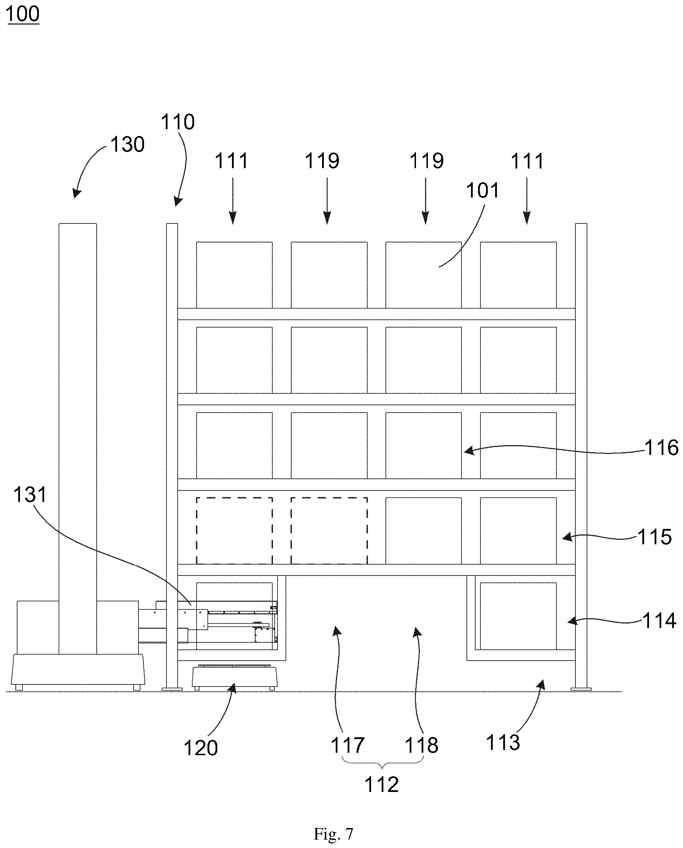

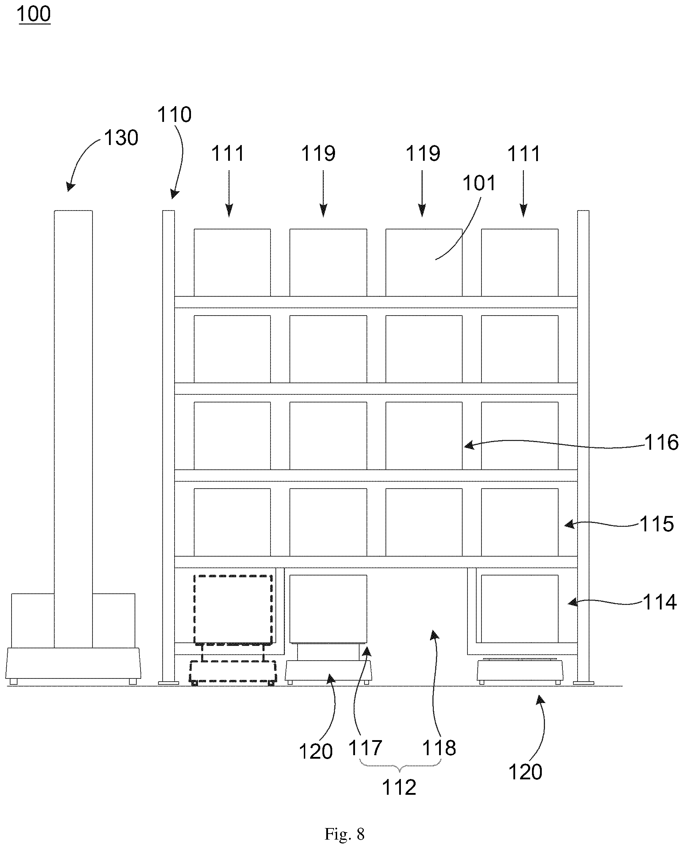

For example, referring to Figs. 5 to 8, the high-floor working robot 130 in Fig. 5 has taken the container 101 in the second storage position 116 and is about to replenish the first storage position 115 located on the same floor. In Fig. 6, the first storage position 115 has been replenished and the high-floor working robot 130 is about to move the container 101 to the temporary storage position 114. In Fig. 7, the high-floor working robot 130 has completed the replenishment of the temporary storage position 114, and the transfer robot 120 has stood by below the temporary storage position 114. In Fig. 8, the transfer robot 120 has picked up the container 101 and moved it by using the two-way transport channel 112.

According to the warehousing system 100 of the present disclosure, the middle part of the bottom side of the goods shelf 110 is used as the two-way transport channel 112, and the transfer robot 120 only takes goods from the temporary storage position 114 at the bottom floor, which reduces the complexity of the path of the transfer robot 120, simplifies the scheduling and improves the work efficiency. Moreover, the high-floor working robot 130 moves in the laneway, while the transfer robot 120 moves at the bottom floor of the goods shelf 110, which avoids the intersection of the paths of the two and the detours, which is conducive to improving the work efficiency and overall good scheduling.

Unless otherwise defined, technical and scientific terms used herein have the same meaning as commonly understood by those skilled in the field of the present disclosure. The terms used herein are only for describing specific implementation purposes and are not intended to limit the present disclosure.

The present disclosure has been described by the above embodiments, but it should be understood that the above embodiments are only for the purpose of illustration and explanation, and the present disclosure is not limited to the above embodiments. According to the teaching of the present disclosure, more variations and modifications can be made, which are all within the scope of the present disclosure.

**Claims**

1. A carrying device, comprising:

   a bottom plate; and
   a support layer configured to bearing an object, and comprising a plurality of protrusions arranged on a first side of the bottom plate and protruding from the first side of the bottom plate along a height direction, wherein the plurality of protrusions are arranged at intervals along a first direction, so that shelf teeth of a warehousing device are configured to enter the support layer, wherein the first direction is perpendicular to the height direction.

2. The carrying device according to claim 1, further comprising a plurality of first blocking members, wherein the plurality of first blocking members are arranged to the protrusions and respectively arranged at both ends of the support layer along the first direction, or the plurality of first blocking members are arranged to the first side of the bottom plate and respectively arranged at both sides of the support layer along the first direction,

wherein the first blocking member extends beyond the protrusion in the height direction on the first side.

3. The carrying device according to claim 2, wherein the first blocking member comprises a first guide surface, and the first guide surface is inclined outwards and upwards along the first direction.

4. The carrying device according to claim 2, wherein the first blocking member is arranged to the protrusion along an edge of the support layer, and the support layer extends to an edge of the bottom plate; or

wherein the first blocking member is arranged to the bottom plate along an edge of the bottom plate.

5. The carrying device according to claim 2, wherein the first blocking member is configured as a blocking rod or a blocking sheet extending in a direction perpendicular to the first direction.

6. The carrying device according to claim 1, wherein the carrying device has an axisymmetric structure.

7. The carrying device according to claim 1, wherein the first direction is a width direction or a length direction of the bottom plate.

8. The carrying device according to claim 1, wherein the plurality of protrusions are arranged at equal or unequal intervals along the first direction.

9. The carrying device according to claim 1, wherein the protrusion is configured as a strip extending in a direction perpendicular to the first direction.

10. The carrying device according to claim 9, wherein the protrusion is provided with a lightening hole.

11. The carrying device according to claim 1, wherein the protrusion is configured as a pin column.

12. The carrying device according to claim 11, wherein the plurality of pin columns are arranged at intervals along the first direction and are also arranged at intervals along a direction perpendicular to the first direction.

13. The carrying device according to claim 12, wherein the plurality of pin columns are arranged at equal intervals along the first direction, and/or the plurality of pin columns are also arranged at equal intervals along the direction perpendicular to the first direction.

14. The carrying device according to any one of claims 1-13, further comprising a plurality of second blocking members, wherein the plurality of second blocking members are arranged to the protrusions and respectively arranged at both ends of the support layer along a second direction, or the plurality of second blocking members are arranged to the first side of the bottom plate and respectively arranged at both sides of the support layer along the second direction, wherein the second direction is perpendicular to the first direction and the height direction, and the second blocking member extends beyond the protrusion in the height direction on the first side.

15. The carrying device according to claim 14, wherein the second blocking member comprises a second guide surface, and the second guide surface is inclined outwards and upwards along the second direction.

16. The carrying device according to claim 14, wherein the second blocking member is arranged to the protrusion along an edge of the support layer, and the support layer extends to an edge of the bottom plate; or

wherein the second blocking member is arranged to the bottom plate along an edge of the bottom plate.

17. The carrying device according to claim 14, wherein the second blocking member is configured as a blocking rod.

18. A transfer robot, comprising:

a robot body configured to move; and
a carrying device according to any one of claims 1-17 arranged at a top of the robot body, wherein a side of the bottom plate facing away the first side faces the robot body.

19. A warehousing system, comprising:

    a transfer robot according to claim 18; and
    a goods shelf comprising a plurality of shelf teeth arranged at intervals,
    wherein the plurality of shelf teeth are matched with the protrusions, so that the protrusions are configured to protrude from gaps among the shelf teeth.

20. The warehousing system according to claim 19, wherein the carrying device of the transfer robot further comprises a plurality of first blocking members, the plurality of first blocking members are arranged to the protrusions and respectively arranged at both ends of the support layer along the first direction, or the plurality of first blocking members are arranged to the first side of the bottom plate and respectively arranged at both sides of the support layer along the first direction,

    wherein the first blocking member extends beyond the protrusion in the height direction on the first side,
    wherein the plurality of shelf teeth are also matched with the first blocking members, so that the first blocking members are configured to simultaneously protrude from the gaps among the shelf teeth.

21. The warehousing system according to claim 19 or 20, wherein the carrying device of the transfer robot further comprises a plurality of second blocking members, wherein the plurality of second blocking members are arranged to the protrusions and respectively arranged at two ends of the support layer along a second direction, or the plurality of second blocking members are arranged to the first side of the bottom plate and respectively arranged at two sides of the support layer along the second direction,

    wherein the second direction is perpendicular to the first direction and the height direction, and the second blocking member extends beyond the protrusion in the height direction on the first side,
    wherein the plurality of shelf teeth are also matched with the second blocking members, so that the second blocking members are configured to simultaneously protrude from the gaps among the shelf teeth.

22. The warehousing system according to claim 19, wherein the shelf teeth are arranged at a lowest floor of the goods shelf.

23. The warehousing system according to claim 22, further comprising a high-floor working robot, wherein the transfer robot is configured to remove goods from or placing goods to the lowest floor of the goods shelf, and the high-floor working robot is configured to remove goods from or placing goods to other floors of the goods shelf.

24. A warehousing system, comprising:

    a goods shelf configured to storing containers, a lowest floor of the goods shelf comprising a temporary storage position and a two-way transport channel adjacent to the temporary storage position, and the temporary storage position being provided with shelf teeth; and
    a transfer robot configured to perform at least one of the following actions: taking the container from the temporary storage position, placing the container into the temporary storage position, and traveling in the two-way transport channel when loaded or unloaded.

25. The warehousing system according to claim 24, wherein the temporary storage position is higher than the ground, and a height gap between the temporary storage position and the ground is configured as an additional transport channel, so that the transfer robot is configured to travel in the additional transport channel and move to be below the temporary storage position when unloaded.

26. The warehousing system according to claim 25, wherein the goods shelf comprises at least two floors and at least four rows of goods stations on each floor, two rows of goods stations at both ends of the lowest floor of the goods shelf are configured as the temporary storage positions, and other middle space in the lowest floor of the goods shelf except the two rows of temporary storage positions is configured as the two-way transport channel.

27. The warehousing system according to claim 26, wherein the goods shelf comprises four rows of goods stations on each floor, the goods shelf comprises two end rows and two middle rows located between the two end rows, and the two-way transport channel is located in a spatial position of the two middle rows in the lowest floor of the goods shelf.

28. The warehousing system according to claim 27, wherein other goods positions in the goods shelf except the temporary storage positions are storage positions.

29. The warehousing system according to claim 28, wherein a laneway is arranged between adjacent goods shelves, and the warehousing system further comprises a high-floor working robot, and the high-floor working robot is configured to travel in the laneway.

30. The warehousing system according to claim 29, wherein the high-floor working robot has a container taking and placing device, the container taking and placing device is configured to perform at least one of the following actions: taking the container from the storage position and placing the container on the temporary storage position, and taking the container from the temporary storage position and placing the container on the storage position.

31. The warehousing system according to claim 30, wherein the storage position located in the end row in the goods shelf is configured as a first storage position, and the high-floor working robot is configured to take the container from the first storage position and place the container into the temporary storage position.

32. The warehousing system according to claim 31, wherein the storage position located in the middle row on an inner side of the end row in the goods shelf is configured as a second storage position, and the high-floor working robot is configured to take the container from the second storage position and place the container into the first storage position.

33. The warehousing system according to any one of claims 24-32, wherein the number of the rows in the goods shelf is an even number.

34. The warehousing system according to claim 33, wherein the two-way transport channel comprises at least one first channel and at least one second channel, and the first channel and the second channel allow opposite driving directions, wherein the number of the first channels is equal to the number of the second channels.

35. The warehousing system according to any one of claims 24-32, wherein the transfer robot is configured to comprise a carrying device according to any one of claims 1-17.

36. A goods shelf, wherein the goods shelf is configured to store a container, a lowest floor of the goods shelf comprises a temporary storage position and a two-way transport channel adjacent to the temporary storage position, and the temporary storage position is provided with shelf teeth.

37. The goods shelf according to claim 36, wherein the goods shelf comprises at least two floors and at least four rows of goods stations in each floor, two rows of goods stations located at both ends of the lowest floor of the goods shelf are configured as the temporary storage positions, and other middle space located in the lowest floor of the goods shelf except the two rows of temporary storage positions is configured as the two-way transport channel.

38. The goods shelf according to claim 36, wherein a gap is defined between adjacent shelf teeth, and the gap is communicated with the two-way transport channel.

39. The goods shelf according to claim 37, wherein the goods shelf comprises four rows of goods stations on each floor, the goods shelf comprises two end rows and two middle rows located between the two end rows, and the two-way transport channel is located in a spatial position of the two middle rows in the lowest floor of the goods shelf.

40. The goods shelf according to claim 36, wherein other goods positions in the goods shelf except the temporary storage position are storage positions.

41. The goods shelf according to any one of claims 37-40, wherein the number of the rows in the goods shelf is an even number.

42. The goods shelf according to claim 41, wherein the two-way transport channel comprises at least one first channel and at least one second channel, and the first channel and the second channel allow opposite driving directions, wherein the number of the first channels is equal to the number of the second channels.

1

Fig. 1

200

Fig. 2

1

Fig. 3

Fig. 4

100

Fig. 5

100

Fig. 6

100

Fig. 7

Fig. 8

## INTERNATIONAL SEARCH REPORT

| International application No. |
| --- |
| **PCT/CN2022/130656** |

**A. CLASSIFICATION OF SUBJECT MATTER**

B65G 1/00(2006.01)i; B65G 1/04(2006.01)i; B65G 1/137(2006.01)i; A47F 5/00(2006.01)i; B25J 5/00(2006.01)i; B25J 9/16(2006.01)i

According to International Patent Classification (IPC) or to both national classification and IPC

**B. FIELDS SEARCHED**

Minimum documentation searched (classification system followed by classification symbols)

B65G1/-; A47F5/-; B25J5/-; B25J9/-

Documentation searched other than minimum documentation to the extent that such documents are included in the fields searched

Electronic data base consulted during the international search (name of data base and, where practicable, search terms used)

CNTXT, CNABS, CNKI: 极智嘉科技, 上海快仓, 王梦迪, 载物, 置物, 货架, 仓储, 物流, 机器人, 搬运车, 叉臂, 梳齿, 凸起, 阻挡, 挡片 VEN, ENTXT, OETXT, DWPI, WPABS: loud, transfer, robot, warehousing, spacer, forklift, shelves, transport, stopper

**C. DOCUMENTS CONSIDERED TO BE RELEVANT**

| Category* | Citation of document, with indication, where appropriate, of the relevant passages | Relevant to claim No. |
| --- | --- | --- |
| X | CN 111361908 A (SHANGHAI QUICKTRON INTELLIGENT SCIENCE & TECHNOLOGY CO., LTD.) 03 July 2020 (2020-07-03) description, paragraphs 0094-0190, and figures 1-16 | 1-23 |
| Y | CN 111361908 A (SHANGHAI QUICKTRON INTELLIGENT SCIENCE & TECHNOLOGY CO., LTD.) 03 July 2020 (2020-07-03) description, paragraphs 0094-0190, and figures 1-16 | 35 |
| X | CN 112830137 A (SHANGHAI QUICKTRON INTELLIGENT SCIENCE & TECHNOLOGY CO., LTD.) 25 May 2021 (2021-05-25) description, paragraphs 0076, 0078-0153, figures 1-15 | 24-34, 36-42 |
| Y | CN 112830137 A (SHANGHAI QUICKTRON INTELLIGENT SCIENCE & TECHNOLOGY CO., LTD.) 25 May 2021 (2021-05-25) see description, paragraphs 0076, 0078-0153, figures 1-15 | 35 |
| X | CN 112478560 A (SHANGHAI QUICKTRON INTELLIGENT SCIENCE & TECHNOLOGY CO., LTD.) 12 March 2021 (2021-03-12) descriptions, paragraphs 0016-0035, figures 1-3, 9-15 | 1-21 |

☑ Further documents are listed in the continuation of Box C. ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **11 January 2023** | **20 January 2023** |

| Name and mailing address of the ISA/CN | Authorized officer |
| --- | --- |
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**

International application No.

**PCT/CN2022/130656**

### C. DOCUMENTS CONSIDERED TO BE RELEVANT

| Category* | Citation of document, with indication, where appropriate, of the relevant passages | Relevant to claim No. |
|---|---|---|
| X | CN 210392455 U (SHENZHEN YEEFUNG ROBOTICS CO., LTD.) 24 April 2020 (2020-04-24)<br>　　description, paragraphs 0061-0062, 0074-0076, figures 1-19 | 1-23 |
| X | WO 2021190085 A1 (SHANGHAI QUICKTRON INTELLIGENT TECH. CO., LTD.) 30 September 2021 (2021-09-30)<br>　　figures 1-8 | 1-23 |
| X | WO 2019123254 A1 (CAJA ELASTIC DYNAMIC SOLUTIONS LTD.) 27 June 2019 (2019-06-27)<br>　　figures 5-21, 23-33 | 1-23 |
| A | CN 213649438 U (SHANGHAI QUICKTRON INTELLIGENT SCIENCE & TECHNOLOGY CO., LTD.) 09 July 2021 (2021-07-09)<br>　　entire document | 1-42 |
| A | CN 109987366 A (HANGZHOU DACHUAN INTELLIGENT TECHNOLOGY CO., LTD.) 09 July 2019 (2019-07-09)<br>　　entire document | 1-42 |
| A | CN 110654760 A (TIANJIN JINGDONG SHENTUO ROBOT TECHNOLOGY CO., LTD.) 07 January 2020 (2020-01-07)<br>　　entire document | 1-42 |

Form PCT/ISA/210 (second sheet) (January 2015)

**INTERNATIONAL SEARCH REPORT**

International application No.

**PCT/CN2022/130656**

| Box No. III | Observations where unity of invention is lacking (Continuation of item 3 of first sheet) |
|---|---|

This International Searching Authority found multiple inventions in this international application, as follows:

[1]  I: claims 1-17;

[2]  II: claim 18;

[3]  III: claims 19-23;

[4]  IV: claims 24-35;

[5]  V: claims 36-42

1. ☑ As all required additional search fees were timely paid by the applicant, this international search report covers all searchable claims.

2. ☐ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest**  ☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☑ No protest accompanied the payment of additional search fees.

Form PCT/ISA/210 (continuation of first sheet) (January 2015)

**INTERNATIONAL SEARCH REPORT**
Information on patent family members

International application No.

**PCT/CN2022/130656**

| Patent document cited in search report | | | Publication date (day/month/year) | Patent family member(s) | | | Publication date (day/month/year) |
|---|---|---|---|---|---|---|---|
| CN | 111361908 | A | 03 July 2020 | CN | 111361908 | A | 15 October 2021 |
| CN | 112830137 | A | 25 May 2021 | CN | 214421445 | U | 19 October 2021 |
| CN | 112478560 | A | 12 March 2021 | CN | 214398381 | U | 15 October 2021 |
| CN | 210392455 | U | 24 April 2020 | None | | | |
| WO | 2021190085 | A1 | 30 September 2021 | KR | 20220122744 | A | 02 September 2022 |
| | | | | WO | 2021190084 | A1 | 30 September 2021 |
| | | | | CN | 212150304 | U | 15 December 2020 |
| | | | | CN | 111232530 | A | 05 June 2020 |
| WO | 2019123254 | A1 | 27 June 2019 | US | 2021090001 | A1 | 25 March 2021 |
| | | | | EP | 3728079 | A1 | 28 October 2020 |
| | | | | EP | 3728079 | A4 | 19 January 2022 |
| CN | 213649438 | U | 09 July 2021 | None | | | |
| CN | 109987366 | A | 09 July 2019 | None | | | |
| CN | 110654760 | A | 07 January 2020 | CN | 110654760 | B | 04 March 2022 |

Form PCT/ISA/210 (patent family annex) (January 2015)

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202220997770

- CN 202220416987